# EUROPÄISCHE PATENTSCHRIFT

(11) **EP 0 824 714 B1**
(45) Veröffentlichungstag und Bekanntmachung des Hinweises auf die Patenterteilung: **30.06.1999**
(21) Anmeldenummer: 96914902.0
(22) Anmeldetag: 11.04.1996
(51) Int. Cl.: G02B 6/38, H01R 13/66

(54) **ELEKTRISCHE STECKVORRICHTUNG**
ELECTRICAL PLUG DEVICE
SYSTEME DE PRISES ELECTRIQUES

(30) Priorität: 06.05.1995 DE 19516707; 05.06.1995 DE 19519935; 11.11.1995 DE 19542167
(43) Veröffentlichungstag der Anmeldung: 25.02.1998
(73) Patentinhaber: Gebr. Merten Gmbh & Co.KG, 51674 Wiehl (DE)
(72) Erfinder: ERBSE, Karl-Ulrich, 00000000 (DE); GRINGMANN, Klaus, D-51647 Gummersbach (DE); SCHMIDT, Helmut, D-51647 Gummersbach (DE); STEFANSKI, Manfred, D-51647 Gummersbach (DE); VICKTORIUS, Richard, D-50739 Köln (DE); ERBSE,Ria Christine, D-51647 Gummersbach (DE)
(74) Vertreter: Selting, Günther, Dipl.-Ing.
(86) Internationale Anmeldenummer: EP9601549
(87) Internationale Veröffentlichungsnummer: WO9635133

(56) Entgegenhaltungen:
- EP-A- 0 437 696
- EP-A- 0 649 192
- DE-A- 3 227 770
- DE-U- 8 803 966
- GB-A- 2 110 410

## Beschreibung

Die Erfindung betrifft eine elektrische Steckvorrichtung mit einer Steckdose, durch die ein Verbraucher an das Versorgungsnetz angeschlossen werden kann.

Aus DE 32 26 265 A1 ist ein flexibles elektrisches Kabel bekannt, das außer den elektrischen Versorgungsleitungen für den Netzanschluß eines Gerätes einen Lichtwellenleiter enthält, über den Signale übertragen werden können. Während elektrische Signalleitungen, die zusammen mit Versorgungsleitungen in einem gemeinsamen Kabel verlegt sind, von den Versorgungsleitungen gestört werden (Übersprechen), werden Lichtsignale durch Ströme oder Spannungen der Versorgungsleitungen nicht beeinflußt.

Aus DE 32 27 770 C2 ist eine elektrische Steckvorrichtung in Form einer Steckdose bekannt, die den Anschluß eines Netzkabels an installierte Netzleitungen ermöglicht und außerdem einen gebäudeseitig installierten Lichtwellenleiter mit einem Lichtwellenleiter des anzuschließenden Kabels optisch verbindet. Hierzu ist wenigstens ein Kontaktteil der elektrischen Steckvorrichtung der Steckdose zugleich als Lichtwellenleiter-Steckvorrichtung ausgebildet. Die Steckvorrichtung verbindet daher den elektrischen und den optischen Teil eines Kabels mit den gebäudeseitigen elektrischen Versorgungsleitungen und den optischen Datenleitungen.

In den letzten Jahren gewinnt die Hausleittechnik eine immer größere Bedeutung. Hierbei werden Datentelegramme über ein in einem Gebäude installiertes Busleitungssystem übertragen. Das Busleitungssystem enthält elektrische Busankoppler, die imstande sind, Datentelegramme zu erzeugen und in das Busleitungssystem einzugeben und Datentelegramme zu empfangen und auszuwerten. Die Busankoppler werden jeweils mit einem externen elektrischen Gerät verbunden. Auf diese Weise ist es möglich, über das Busleitungssystem elektrische Geräte im Gebäude zu überwachen, fernzusteuern oder zu schalten. Ein derartiges Signalübertragungssystem für die Hausleittechnik ist in EP 0 344 609 B1 beschrieben.

Der Erfindung liegt die Aufgabe zugrunde, eine elektrische Steckvorrichtung zu schaffen, die den gleichzeitigen Anschluß eines elektrischen Gerätes an das Stromnetz und ein elektrisches Busleitungssystem ermöglicht, ohne daß in dem anzuschließenden Kabel die Datenleitungen von den Netzleitungen beeinflußt würden.

Die Lösung dieser Aufgabe erfolgt bei einer ersten Variante der Steckvorrichtung erfindungsgemäß mit den im Patentanspruch 1 angegebenen Merkmalen und bei einer zweiten Variante der Steckvorrichtung mit den im Patentanspruch 5 angegebenen Merkmalen.

Die beiden Varianten nach den Patentansprüchen 1 und 5 beziehen sich auf die Anwendung der Erfindung auf unterschiedliche Systeme von Steckvorrichtungen, wobei die Variante, die dem Patentanspruch 1 zugrundeliegt, auf Systemen basiert, wie sie z.B. in Belgien, Frankreich oder Deutschland üblich sind, während die Variante, die dem Patentanspruch 5 zugrundeliegt, auf dem z.B. in England üblichen System beruht.

Die erfindungsgemäße Steckvorrichtung ist generell auf der Grundlage der üblichen Steckdosen für die Netzversorgung konzipiert. Derartige Steckdosen weisen einen an einem Halter befestigten Sockel, Kontaktelemente und Anschlußklemmen für Netzleitungen auf. Nach der Erfindung ist in oder getrennt von der Steckdose ein Busankoppler angebracht, der mit einer gebäudeseitig installierten elektrischen Busleitung verbindbar ist. Dieser Busankoppler ist eine elektrische Vorrichtung, die mit anderen Busankopplern einen elektronischen Telegrammverkehr durchführen kann, z.B. ein "Bus Interface Module" (BIM). Der Busankoppler kann dementsprechend als intelligente Version (mit Mikroprozessor) oder als passive Version (ohne Mikroprozessor) ausgebildet sein. Er enthält beispielsweise einen Mikroprozessor und elektronische Speicher. Der Busankoppler ist mit einem lichtelektrischen Wandler verbunden, der in der Steckdose enthalten ist und durch ein Fenster der Abdeckung der Steckdose hindurch mit einem Lichtleiter kommunizieren kann, der in dem zugehörigen Stecker endet, welcher in die Steckdose eingesteckt werden kann. Auf diese Weise dient die Steckdose nicht nur zum Herstellen elektrischer oder optischer Kopplungen, sondern sie dient zugleich zur Umwandlung elektrischer Signale in Lichtsignale bzw. zur Umwandlung von Lichtsignalen in elektrische Signale. Während die Datenverarbeitung in dem gebäudeseitigen elektrischen Hausleitsystem durchgeführt wird, hat die Steckdose die Aufgabe, Signale, die von dem angeschlossenen Gerät über Lichtleiter übertragen werden, in elektrische Signale umzuwandeln und/oder elektrische Signale, die von dem Busankoppler erzeugt werden, in Lichtsignale für das angeschlossene Gerät umzuwandeln. Auf diese Weise können die üblichen elektrischen Hausleitsysteme verwendet werden, die vom Versorgungsnetz entkoppelt sind und somit durch das Versorgungsnetz nicht gestört werden, während der Anschluß des elektrischen Gerätes über ein flexibles Kabel erfolgt, in dem die elektrischen Versorgungsleitungen mit Lichtleitern kombiniert sind. Die Signale in Lichtwellenleitern werden durch Spannungen oder Störme der Versorgungsleitungen nicht beeinflußt, so daß kein Übersprechen stattfindet.

Erfindungsgemäß ist also der Übergang zwischen Elektronik und Lichtsignaltechnik in der Steckdose selbst vorgesehen, so daß keine zusätzlichen Apparate benötigt werden und der Anschluß eines elektrischen Gerätes in der üblichen Weise durch einfaches Einstecken eines Steckers in eine Steckdose erfolgen kann. Die über den Datenbus übertragenen analogen oder digitalen elektrischen Signale werden in der Steckdose in optische Signale umgewandelt. Diese optischen Signale werden in dem elektrischen Anschlußkabel übertragen und im Gerät wieder in elektrische Signale umgewandelt. In der Regel ist der Signalfluß zwischen dem Gerät und dem Datenbus bidirektional. Dieser bidirektionale Datenfluß kann über zwei Lichtwellenleiter (einen für jede der beiden Richtungen) geführt werden, oder auch im Einleiterbetrieb, wenn für die Hinleitung ein anderes Zeitfenster zur Verfügung steht als für die Rückleitung.

Durch mindestens ein Fenster der Abdeckung der Steckdose hindurch erfolgt der Austausch der Lichtsignale. Dabei ist vorzugsweise die Durchlaßöffnung bzw. die Übergabeöffnung der Lichtsignale zwischen Steckdose und Stecker etwa fluchtend mit der Bodenwand der Abdeckung angeordnet. Dies bedeutet, daß die Lichtempfangsöffnung des Steckers sich in der Stirnwand des Steckers befindet, die bei voll eingestecktem Stecker bündig an der Bodenwand der Abdeckung der Steckdose anliegt.

Ein besonderer Vorteil besteht darin, daß die Steckdose wahlweise mit und ohne Lichtsignalübertragung betrieben werden kann, in Abhängigkeit davon, ob der verwendete Stecker eine Lichtübertragung ermöglicht. Wird in die Steckdose ein üblicher Stecker, der nur für den Netzanschluß geeignet ist, eingesteckt, so funktioniert die Steckdose als normale elektrische Steckdose ohne Datenübertragung.

Ein Problem bei der optischen Signalübertragung ist stets die Kopplung der Sende- und Empfangsdioden an den Lichtwellenleiter. Hierzu muß das Ende des Lichtwellenleiters sehr genau in bezug auf die Dioden positioniert werden. Dadurch, daß sich die Lichtdurchlaßöffnung an der Bodenwand der Abdeckung befindet, ist eine solche genaue Positionierung sichergestellt, weil der Stecker beim Einstecken in der Abdeckung der Steckdose zentriert wird.

Im Rahmen der Erfindung besteht die Möglichkeit, den lichtelektrischen Wandler (als Sender oder Empfänger) im vorderen Teil der Steckdose, also in dem Bereich des Fensters der topfförmigen Abdeckung, anzuordnen, wodurch ein kurzer Lichtweg bis zum Lichtwellenleiter des Steckers erreicht wird. Eine andere Möglichkeit besteht darin, den Wandler an dem Busankoppler anzuordnen und ihn an einen Lichtleiter anzuschließen, der das Licht bis zur Durchlaßöffnung weiterleitet.

Der Busankoppler kann hinter dem Sockel angeordnet sein oder in einem seitlich vom Sockel abstehenden Gehäuse, das dem Sockel einstückig angeformt ist. Im letzteren Fall wird für die Steckdose zweckmäßigerweise eine Doppel-Wanddose benutzt, die seitlich neben dem Sockel einen genügenden Freiraum für den Busankoppler bereitstellt. Der Busankoppler kann auch als separate Einheit getrennt von der Steckdose angeordnet werden, z.B. in einer eigenen Wanddose.

Im Rahmen der Erfindung ist ein lichtelektrischer Wandler ein Wandler, der entweder elektrische Signale in Lichtsignale oder Lichtsignale und elektrische Signale umwandelt.

Bei dem Datenbus handelt es sich vorzugsweise um einen elektrischen Datenbus gemäß der "European Installation Bus Association" (EIBA). Der Busankoppler BA kann beispielsweise als "Bus Interface Modul" (BIM) ausgebildet sein.

Die Erfindung bewirkt eine sichere Lichtübertragung von der Steckdose zum Stecker und in Gegenrichtung, wobei die Lichtverluste durch seitlichen Versatz, Winkelversatz und Separation am Luftspalt so gering gehalten werden, daß dadurch die Funktion der Datenübertragung nicht beeinträchtigt wird.

Im folgenden werden unter Bezugnahme auf die Zeichnungen Ausführungsbeispiele der Erfindung näher erläutert.

Es zeigen:
- Fig. 1: eine schematische Darstellung des Aufbaus der elektrischen Steckvorrichtung,
- Fig. 2: eine Frontansicht der Steckvorrichtung,
- Fig. 3: einen Schnitt entlang der Linie III-III von Fig. 2,
- Fig. 4: eine Frontansicht bei abgenommener Abdeckung,
- Fig. 5: einen Schnitt entlang der Linie V-V von Fig. 2,
- Fig. 6: eine Ansicht der Rückseite der Steckdose,
- Fig. 7: eine vergrößterte Darstellung des Übergangsbereichs zwischen optischen und elektrischen Signalen gemäß Fig. 5,
- Fign. 7a-7c: verschiedene Abwandlungen des Übergangsbereichs,
- Fig. 8: eine Darstellung einer Steckvorrichtung nach dem englischen System,
- Fig. 9: eine Ansicht des Steckers von Fig. 8 aus Richtung der Pfeile IX-IX von Fig. 8,
- Fig.10: eine Ansicht der Steckdose aus Richtung der Pfeile X-X von Fig. 8,
- Fig.11: eine schematische Darstellung einer Anschlußvorrichtung mit separat untergebrachtem Busankoppler, und
- Fig. 12: einen Schnitt durch eine weitere Ausführungsform der Anschlußvorrichtung mit einem einzigen Y-förmigen Lichtleiter.

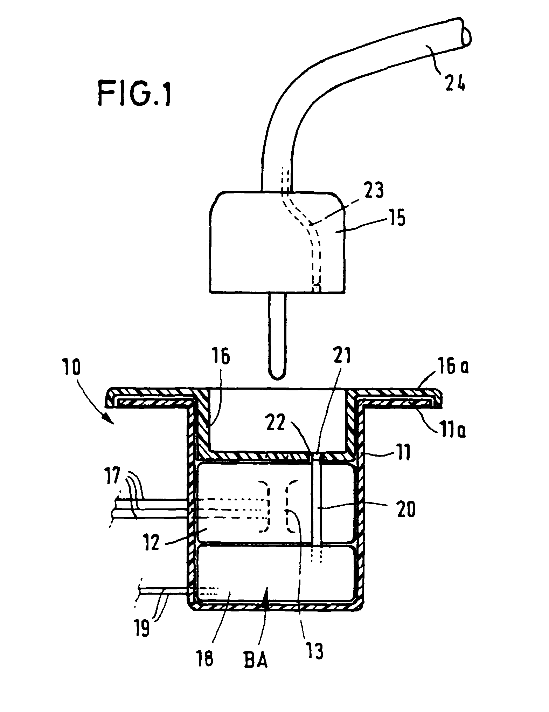

Gemäß Fig. 1 weist die Steckdose 10 einen Halter 11 auf, der hier aus Metall besteht und sämtliche Komponenten der Steckdose trägt. Der Halter 11 ist mit einem Frontrahmen 11a versehen, mit dem er in der Umgebung einer Unterputzdose an einer Wand abgestützt wird. Der Halter 11 weist außerdem Krallen zur Befestigung der Steckdose in einer Unterputzdose auf.

Der Halter 11 enthält einen aus isolierendem Material bestehenden Sockel 12, an dem Anschlußklemmen 14 für Netzleitungen und Kontaktelemente 13 für die Steckerstifte eines Steckers 15 vorgesehen sind. Zur Frontseite hin ist in den Rahmen 11 ein aus Kunststoff bestehender topfförmiger Abdeckung 16 eingesetzt, der bis zum Sockel 12 reicht und an diesem verschraubt ist. Die Abdeckung 16 enthält Löcher für den Durchtritt der Kontaktstifte des Steckers 15. An der Frontseite ist die Abdeckung 16 mit einem Blendenrand 16a versehen, der dem Frontrahmen 11a des Halters 11 vorgesetzt ist. Die Abdeckung 16 bildet eine Aufnahme für den Stecker 15.

Zu den Anschlußklemmen 14 des Sockels 12 führen Netzleitungen 17 des Versorgungsnetzes. Diese Netzleitungen führen beispielsweise eine Spannung von 230 V und 50 Hz.

An der Rückseite des Sockels 12 befindet sich ein Gehäuse 18, in dem eine elektrische Busankopplungseinheit BA untergebracht ist. Die Busankopplungseinheit BA ist mit einer Busleitung 19 verbunden, die gebäudeseitig installiert ist und als zweiadrige Leitung oder als Koaxialleitung ausgeführt sein kann. Die Busleitung 19 ist eine Datenleitung, die mit Niederspannung betrieben wird und auf der Signale in digitaler oder analoger Form übertragen werden.

Von dem Gehäuse 18 führt ein Kanal 20 durch den Sockel 12 hindurch zu einem photoelektrischen Wandler 21, der in einem Fenster 22 der Bodenwand der Abdeckung 16 angeordnet ist.

Der in die Steckdose 10 einsteckbare Stecker 15 enthält einen Lichtwellenleiter 23, dessen Ende 23a dem Wandler 21 genau gegenüberliegt, wenn der Stecker 15 korrekt in die Steckdose 10 eingeschoben ist. Der Stecker 15 ist mit einem flexiblen Kabel 24 verbunden, das zu einem (nicht dargestellten) elektrischen Gerät führt, das über die Busleitung 19 gesteuert wird oder Informationen an die Busleitung 19 überträgt. Das Kabel 24 enthält sowohl die elektrischen Netzleitungen für den Betrieb des elektrischen Geräts als auch den Lichtwellenleiter 23.

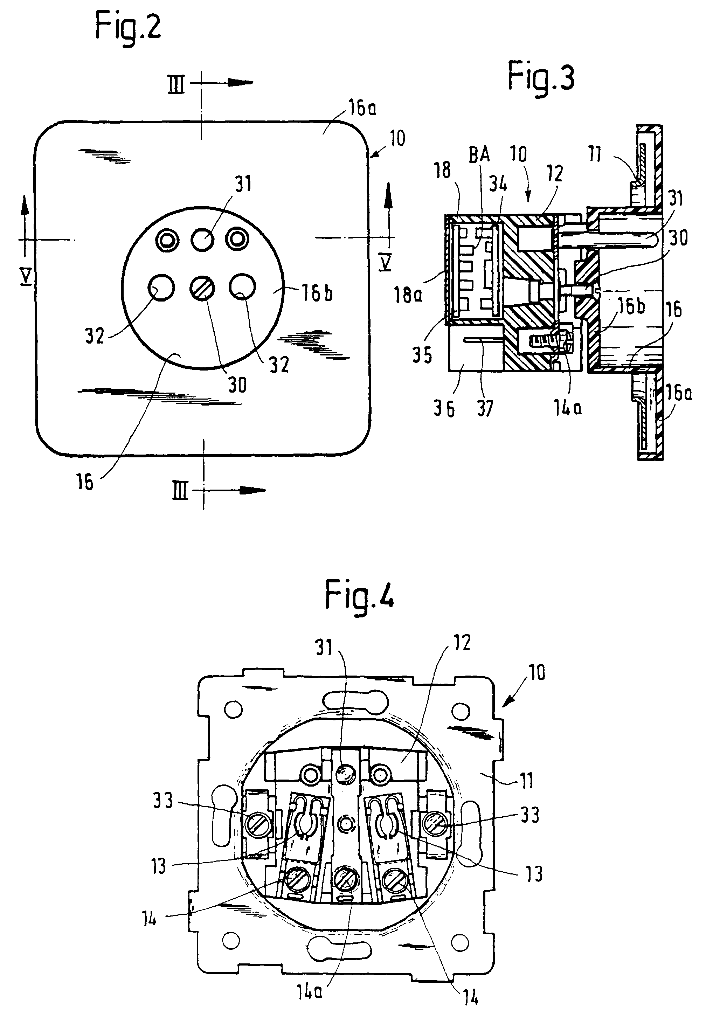

In den Fign. 2-7 ist die Steckvorrichtung nach Fig. 1 detaillierter dargestellt. In der Frontdarstellung von Fig. 2 ist von der Steckdose nur die topfförmige Abdeckung 16 mit dem umgebenden Blendenrand 16a sichtbar. Diese Abdeckung ist mit einer Schraube 30 an dem Sockel 12 befestigt. Auf der Vorderseite des Sockels 12 sind Anschlußklemmen 14 und 14a für die Netzleitungen 17 vorgesehen, die jeweils mit einem der elastischen Kontaktelemente 13 in Verbindung stehen. Die Anschlußklemme 14a ist mit einem Schutzleiterstift 31 verbunden, der durch eine Öffnung in der Bodenwand 16b der Abdeckung 16 hindurchragt, um mit einem Kontaktelement des zugehörigen Steckers zusammenzugreifen. Der Schutzleiterstift 31 bildet zugleich eine Unverwechselbarkeitseinrichtung, durch die sichergestellt wird, daß der Stecker stets nur in einer einzigen Steckerposition in die Steckdose 12 hineingesteckt werden kann. In der Bodenwand 16b der Abdeckung 16 befinden sich über den Kontaktelementen 13 Löcher 32 zum Hindurchstecken der Kontaktstifte des zu der Steckdose gehörenden Steckers.

Wie Fig. 4 zeigt, sind zu beiden Seiten des Sockels 12 Spannschrauben 33 angeordnet, die festgezogen werden können, um Spreizkrallen seitlich auszufahren. Diese Spreizkrallen dienen zum Festhalten der Steckdose in einer Leerdose, die beispielsweise als Unterputzdose ausgeführt sein kann.

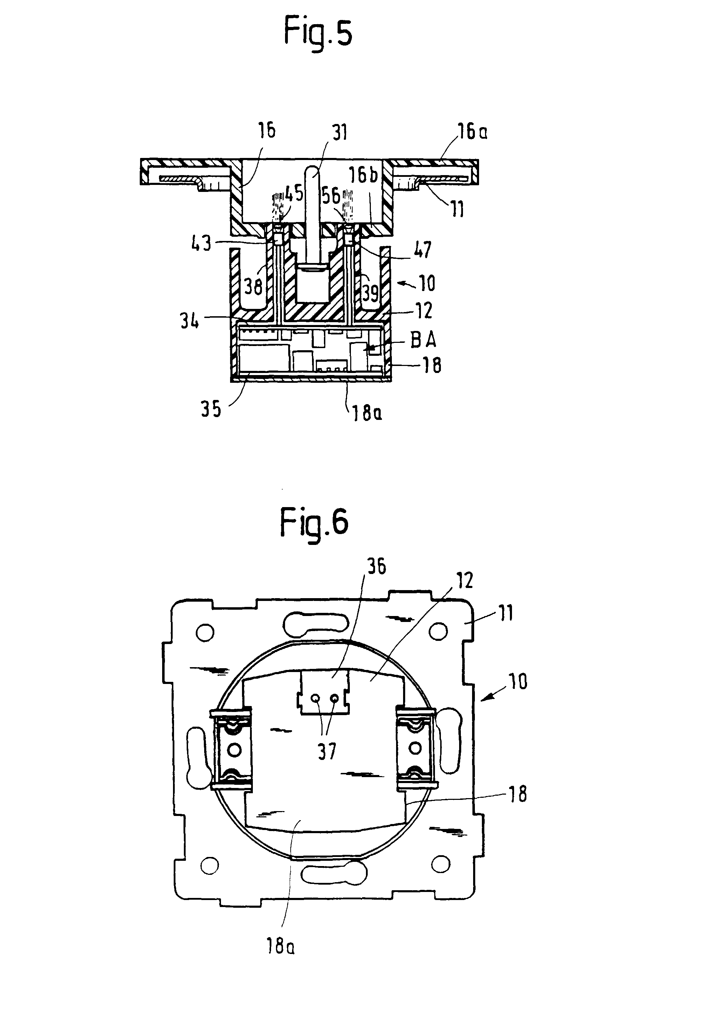

Wie die Fign. 4 und 5 zeigen, ist auf der Rückseite des Sockels 12 ein Gehäuse 18 ausgebildet, das hier einstückiger Bestandteil des Sockels 12 ist. Dieses Gehäuse 18 ist an der rückwärtigen Stirnseite mit einem abnehmbaren Deckel 18a verschlossen. Das Gehäuse 18 enthält den Busankoppler BA in Form einer elektrischen Schaltung, deren Komponenten hier auf zwei Leiterplatten 34,35 enthalten sind. An dem Sockel 12 befindet sich seitlich neben dem Gehäuse 18 eine Ausnehmung 36, in die die Steckerstifte 37 vom Sockel her hineinragen. Auf die Steckerstifte 37 wird ein (nicht dargestellter) Stecker aufgesteckt, der mit den Busleitungen 19 (Fig. 1) verbunden ist. Auf diese Weise werden die Busleitungen 19 an den Busankoppler BA angeschlossen.

Vom Gehäuse 18 aus erstrecken sich zwei dem Sockel 12 einstückig angeformte Säulen 38,39 nach vorne, d.h. in Richtung auf die Abdeckung 16. Durch jede der Säulen 38,39 führt ein Kanal 20 bzw. 20a axial hindurch. Jede der Säulen 38,39 ragt in ein Fenster 22,22a in der Bodenwand 16b der Abdeckung 16 hinein. Die Fenster 22 und 22a sind hier Löcher, jedoch können sie auch Scheiben oder Linsen enthalten. Die Säulen 38,39 enden bündig mit der Frontfläche der Bodenwand 16b. In der Säule 38 ist nahe der Abdeckung 16 ein lichtelektrischer Wandler 21 befestigt. Dieser Wandler 21 enthält einen Lichtsender, beispielsweise eine lichtemittierende Diode 44, sowie die zugehörigen Treibereinrichtungen. Der Wandler 21 ist über elektrische Leitungen 40 mit der Leiterplatte 34 verbunden, die zum Busankoppler BA gehört. Der lichtelektrische Wandler 21 ist ein Lichtsender, der mit S bezeichnet ist. Dieser Sender hat eine sehr kleine Abstrahlfläche, die nach vorne gerichtet ist. Vor dem Wandler 21 ist eine Aufweitungsoptik 45 in Form einer Linse angeordnet, die die von der punktförmigen Lichtquelle ausgehende Strahlung in einen aufgeweiteten Strahl parallelen Lichts umwandelt, welches die Lichtdurchlaßöffnung 46 der Steckdose verläßt.

In dem Kanal 20a der Säule 39 sitzt ein zweiter lichtelektrischer Wandler 21a, der hier als Lichtempfänger E ausgebildet ist und eine Photodiode 48 oder einen Phototransistor enthält. Der Wandler 47 ist über elektrische Leitungen 40 mit der Leiterplatte 34 verbunden. Vor dem Wandler 21a ist in dem Kanal 20a eine Fokussieroptik 49 angeordnet, die einfallendes Licht auf die Lichtempfangsfläche der Photodiode 48 fokussiert. Diese Fokussieroptik 49 ist in der Lichtdurchlaßöffnung 50 in unmittelbarer Nähe der Frontfläche der Bodenwand 16b der Abdeckung 16 angeordnet.

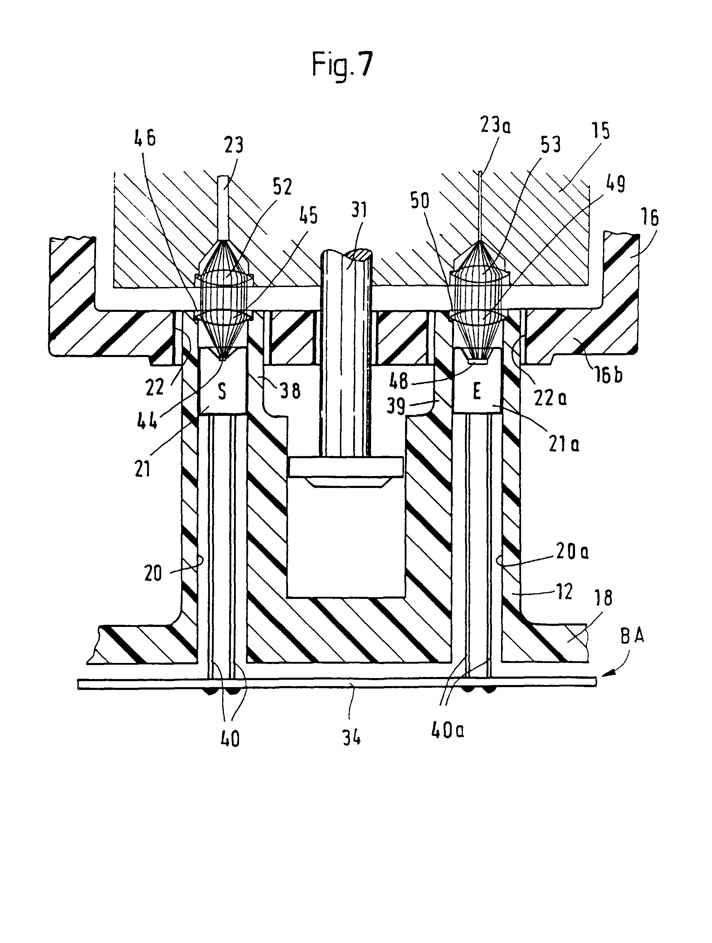

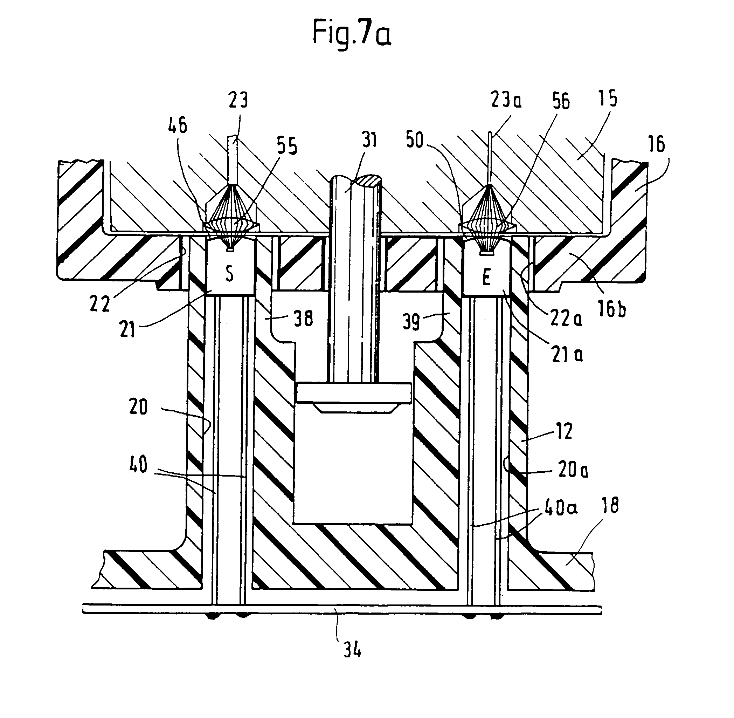

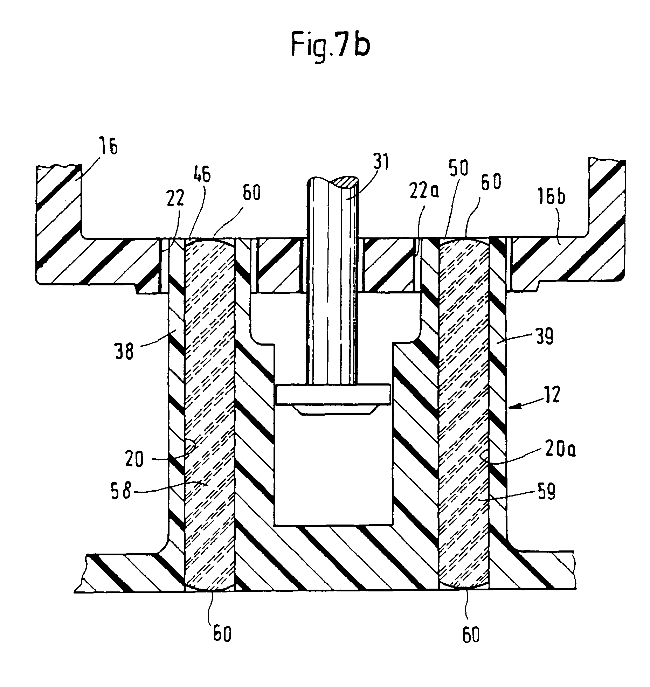

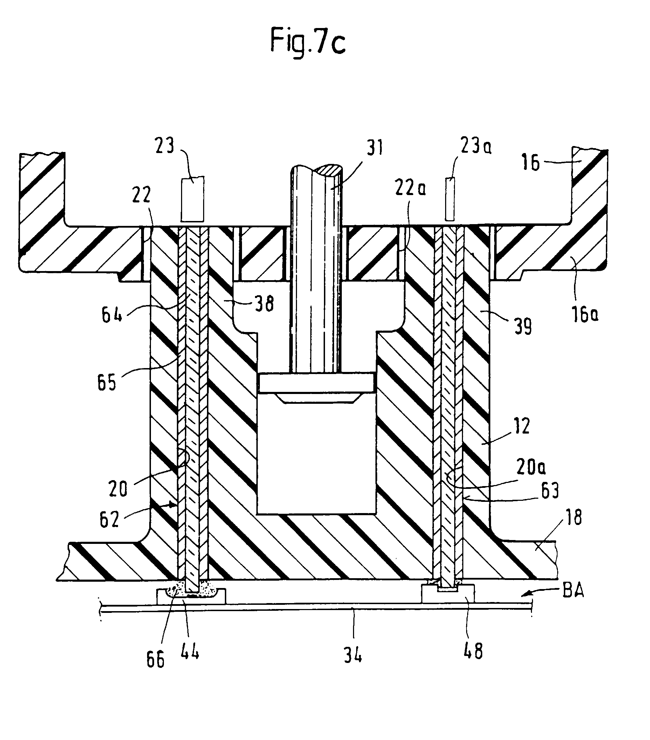

Der zur Steckdose gehörende Stecker ist in Fig. 7 nur andeutungsweise dargestellt und mit 15 bezeichnet. Dieser Stecker enthält die Enden von zwei Lichtwellenleitern 23,23a. Diese Enden sind in dem Stecker 15 in ihrer jeweiligen Position genau fixiert. In der zum Lichtwellenleiter 23 führenden Lichtdurchlaßöffnung befindet sich eine Fokussieroptik 52, die parallel einfallendes Licht auf das stirnseitige Ende des Lichtwellenleiters 23 fokussiert. In der Lichtdurchlaßöffnung, die zu dem anderen Lichtwellenleiter 23a führt, befindet sich eine Aufweitungsoptik 53, die das aus dem Ende des Lichtwellenleiters 23a austretende Licht in einen aufgeweiteten Strahl parallelen Lichts umwandelt.

Aus Fig. 7 ist zu erkennen, daß in dem Spalt zwischen dem Stecker 15 und der Bodenwand 16b ausschließlich paralleles Licht transportiert wird. Im Falle von Fehlausrichtungen des Steckers 15 in bezug auf die Steckdose 10 gelangt nur ein Teil des Lichts nicht von der Lichtquelle zu dem zugehörigen Lichtempfänger, jedoch ist in jedem Fall sichergestellt, daß ein erheblicher Anteil des Lichts den Empfänger bzw. den Lichtwellenleiter erreicht. Auch der Abstand, den die Stirnwand des Steckers 15 von der Bodenwand 16b hat, ist unkritisch, da das parallelgerichtete Licht einen etwaigen Spalt ohne wesentliche Verluste durchläuft.

Die Busankopplungseinheit BA enthält eine digitale oder analoge Datenverarbeitungsschaltung in Form einer oder mehrerer integrierter Schaltungen. Sie wandelt Signaltelegramme, die auf den Busleitungen 19 ankommen, in entsprechende Signale für das angeschlossene elektrische Gerät um. Diese Signale werden über die Leitungen 45 zum Wandler 21 übertragen, der entsprechende Lichtsignale aussendet und diese werden durch den Lichtwellenleiter 23, der durch das Kabel 24 hindurchführt, zu dem elektrischen Gerät übertragen, wo sie wieder in elektrische Signale umgesetzt werden.

Andererseits werden elektrische Signale, die von einer Steuereinrichtung oder einem Meßwertaufnehmer des elektrischen Geräts erzeugt werden, zunächst in Lichtsignale umgewandelt, die über den Lichtwellenleiter 23a durch das Kabel 24 übertragen werden. Diese Lichtsignale werden in den lichtelektrischen Wandler 21a der Steckdose 10 eingekoppelt, wo sie in elektrische Signale umgewandelt werden, welche über die elektrischen Leitungen 40a an den Busankoppler übertragen werden. Der Busankoppler wandelt diese Signale in Telegramme um, welche über die Busleitung 19 abgesandt werden.

Bei dem Ausführungsbeispiel von Fig. 7a sind die lichtelektrischen Wandler 21 und 21a so angeordnet, daß sie sich an den Enden der Kanäle 20 und 20a befinden, wobei ihre Dioden in unmittelbarer Nähe der Frontfläche der Bodenwand 16b angeordnet sind. In dem Stecker 15 befinden sich zwei Abbildungsoptiken 55 und 56. Die Abbildungsoptik 55 bildet die Lichtquelle des Wandlers 21 auf der Stirnfläche des Lichtwellenleiters 23 ab und die Abbildungsoptik 56 bildet die Stirnfläche des Lichtwellenleiters 23a auf den Lichtempfänger des Wandlers 21a ab. Daher kommt man für jeden Lichtweg mit einer einzigen Optik aus.

Bei dem Ausführungsbeispiel von Fig. 7b sind in den Kanälen 20,20a keine elektrischen Leiter vorgesehen, sondern Lichtleiter 58 und 59 in Form von Stäben aus Glas oder einem anderen lichtleitenden Material. Diese Lichtleiter sind an ihren Enden mit angeformten konvexen Linsen 60 versehen. Die lichtelektrischen Wandler befinden sich bei diesem Ausführungsbeispiel in dem Gehäuse des Busankopplers BA und die Lichtübertragung durch den Sockel 12 erfolgt durch die Lichtleiter 58,59, die an ihren Seiten lichtdicht gekapselt sind. Auch das Gehäuse 18, in dem sich der Busankoppler BA befindet, ist lichtdicht verschlossen.

Bei dem Ausführungsbeispiel von Fig. 7c verlaufen durch die Kanäle 20 und 20a Lichtwellenleiter 62 und 63 hindurch, die jeweils aus einer Glasfaser 64 und einem lichtundurchlässigen Mantel 65 bestehen. Die vorderen Enden der Lichtwellenleiter 62 und 63 enden plan an den stirnseitigen Enden der Säulen 38,39 auf einer Ebene mit der Frontseite der Bodenwand 16a der Abdeckung 16.

Das rückwärtige Ende der Glasfaser 64 steht in das Innere des Gehäuses hinein über. Gegenüber diesem Ende befindet sich die lichtemittierenden Diode 44, die unmittelbar auf der Leiterplatte 34 angebracht ist. Durch einen lichtundurchlässigen Kleber 66 ist das überstehende Ende der Glasfaser 64 auf der Lichtempfangsfläche der Diode 44 befestigt, so daß die gesamte Lichtstrahlung, die von der lichtaussendenden Fläche der Diode 44 ausgesandt wird, in die Glasfaser 64 eingeleitet wird.

In gleicher Weise ist die Lichtempfangsdiode 48 ebenfalls auf der Leiterplatte 34 montiert und an die Glasfaser des Lichtwellenleiters 63 angekoppelt.

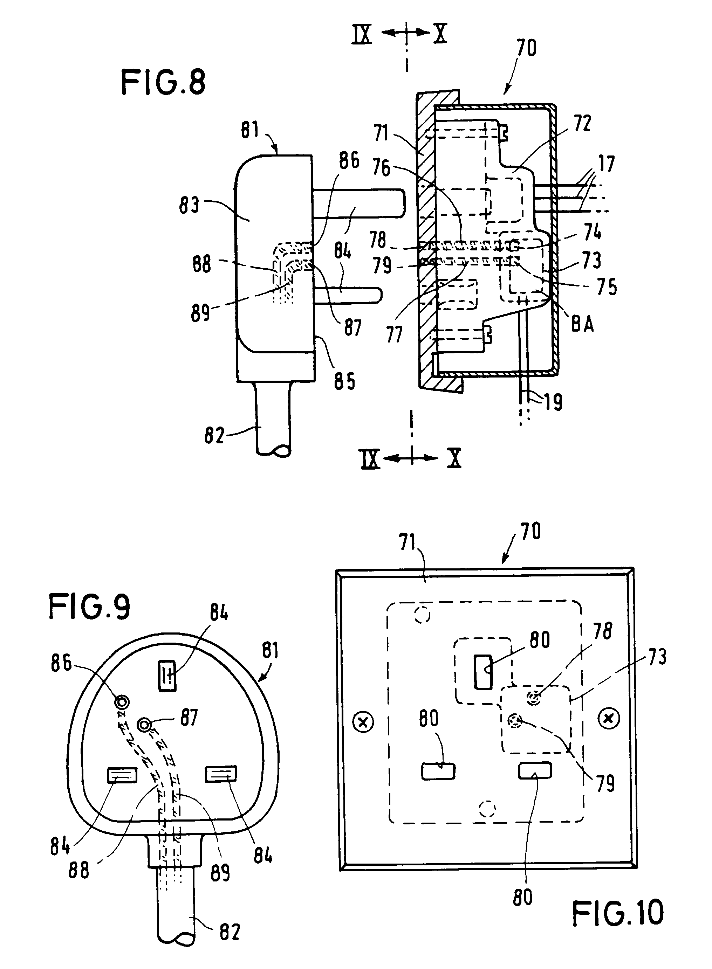

In den Fign. 8-10 ist schematisch eine in England übliche Steckvorrichtung dargestellt. Hierbei weist die Steckdose 70 einen an einer Tragplatte 71 aus Kunststoff bestehenden Sockel 72 auf, in dem sich die Kontaktelemente für die Steckerstifte befinden und der Anschlußklemmen für Netzleitungen 17 hat. Dem Sockel 72 ist ein Gehäuse 73 angeformt, welches den Busankoppler BA enthält. Der Busankoppler BA ist an eine externe Busleitung 19 anschließbar. Er ist mit zwei lichtelektrischen Wandlern 74,75 verbunden, von denen Lichtleiter 76,77 jeweils zu einem Fenster 78,79 in der Tragplatte 71 führen. In Fig. 10 sind die Löcher in der Tragplatte 71 für den Durchtritt der Steckerstifte mit 80 bezeichnet.

Der Stecker 81, der mit einem Kabel 82 verbunden ist, weist einen Steckerkörper 83 auf, von dem drei rechteckige Steckerstifte 84 abstehen, die in die Löcher 80 einsteckbar sind. An der Frontseite 85 des Steckers 81 befinden sich Fenster 86,87, die mit den Fenstern 78,79 zur Deckung kommen, wenn der Stecker in die Steckdose eingesteckt ist. Von den Fenstern 86,87 führen Lichtleiter 88,89 durch das Kabel 82 hindurch bis zu dem angeschlossenen externen Gerät.

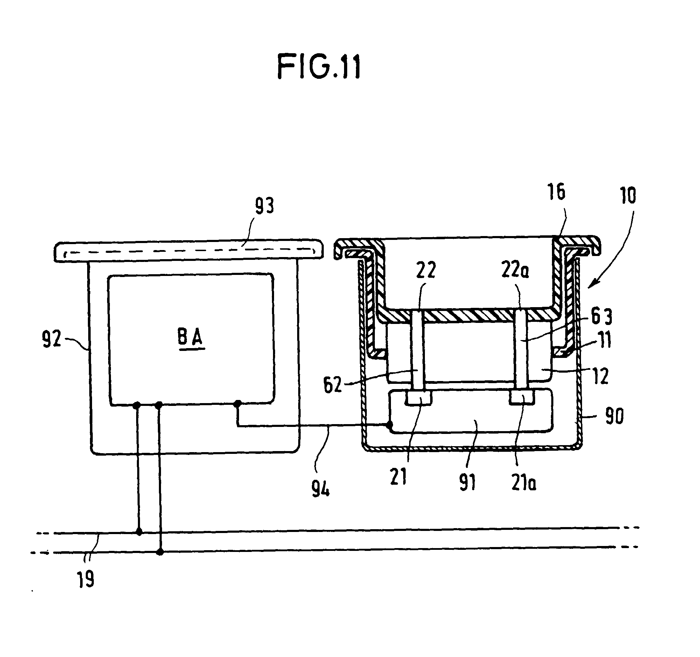

Bei dem Ausführungsbeispiel der Fig. 11 ist eine Steckdose 10 vorgesehen, die in einer Unterputzdose 90 untergebracht ist. Die Steckdose 10 weist einen Halter 11 auf, der den Sockel 12 trägt. Die Steckdose ist in bekannter Weise mit einer Abdeckung 16 versehen, die hier topfförmig ausgebildet ist. Durch den Sockel 12 verlaufen Lichtleiter 62,63, die jeweils an einen photoelektrischen Wandler 21,21a angeschlossen sind. Die Lichtleiter enden jeweils in einem Fenster 22,22a im Boden der Abdeckung 16. Die photoelektrischen Wandler 21,21a sind an der Rückseite des Sockels 12 in einer Wandlereinheit 91 untergebracht.

Der Busankoppler BA befindet sich separat von der Steckdose 19 in einer anderen Wanddose 92, die mit einer Blindabdeckung 93 bedeckt ist. Die gebäudeseitig installierte Busleitung 19 ist mit dem Busankoppler BA verbunden. Ferner führt eine Leitungsverbindung 94 vom Busankoppler BA durch die Wände der Wanddosen 92 und 90 hindurch zu der Wandlereinheit 91.

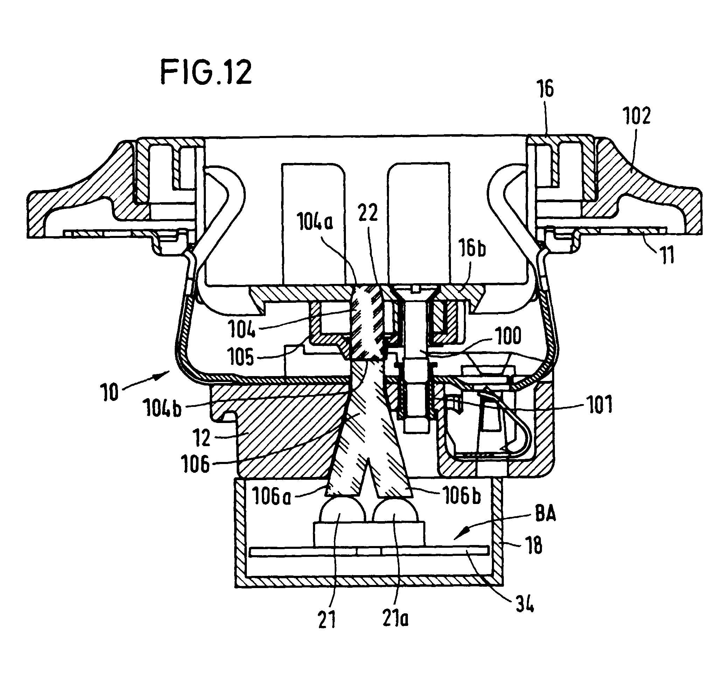

Die Steckdose 10 nach Fig. 12 weist einen Halter 11 auf, an dessen Rückseite der Sockel 12 befestigt ist. In den Halter 11 ist die topfförmige Abdeckung 16 eingesetzt, durch deren Boden 16b eine Schraube 100 hindurchgeführt ist, die in eine Gewindeaufnahme 101 des Sockels 12 eingeschraubt ist. Die Abdeckung 16 ist gegen einen Rahmen 102 gesetzt, der sich an der Wand abstützt und die in die Steckdose 10 eingesetzt wird.

An der Rückseite des Bodens 16b der Abdeckung 16 ist in einem Fenster 22 ein Lichtleiter 104 mit einer Halterung 105 befestigt. Der Lichtleiter 104 besteht aus einem kurzen Leiterstab, dessen eine Stirnseite 104a im Fenster 22 angeordnet ist und dessen andere Stirnseite 104b nach hinten weist. Der Lichtleiter 104 ist Bestandteil der Abdeckung 16.

An den Lichtleiter 104 schließt sich der Stamm eines Y-förmigen Lichtleiters 106 an, der im Sockel 12 befestigt ist und nach vorne aus dem Sockel 12 heraus vorsteht. Die beiden Zweige 106a,106b des Lichtleiters 106 führen jeweils zu einem lichtelektrischen Wandler 21 bzw. 21a. Diese Wandler sind auf einer Platine 34 im Innern eines Gehäuses 18 angeordnet, das hinter dem Sockel 12 befestigt ist. Die Platine 34 trägt die Busankopplungseinheit BA. Der Wandler 21 ist beispielsweise der Sender und der Wandler 21a der Empfänger. Die Lichtleiter 104 und 106 stoßen mit ihren Stirnseiten stumpf gegeneinander, so daß das Licht zwischen diesen Stirnseiten übertragen wird.

Da ein eigener Lichtleiter 104 an der Abdeckung 16 vorgesehen ist, dessen Stirnfläche 104a bündig mit dem Boden 16b ist, ist sichergestellt, daß eine perfekte Kopplung zwischen dem (in Fig. 12 nicht dargestellten) Lichtleiter des Steckers und dem Lichtleiter 104 erfolgt, unabhängig davon, wie weit die Abdeckung 16 in den Halter 11 hineinragt. Dabei ist zu berücksichtigen, daß das Maß des Eintauchens der Abdeckung 16 in den Rahmen 11 von der Stärke der auf der Wand befestigten Tapetenschicht abhängt. Wäre der Lichtleiter 104 Bestandteil des Rahmens 11, dann würde seine Stirnwand 104a nicht immer bündig mit dem Boden 16b der Abdeckung 16 verlaufen. Gemäß Fig. 12 erfolgt ein etwaiger Positionsausgleich der Abdeckung 16 dadurch, daß ein Spalt zwischen den Lichtleitern 104 und 106 gebildet wird.

Gemäß Fig. 12 erfolgt die Datenübertragung nur über einen einzigen Lichtleiterweg, der allerdings mehrere Lichtleiterabschnitte enthalten kann. Für eine solche Übertragung ist ein Halbduplex-Betrieb vorgesehen, bei dem die Datenübertragung zu einem Zeitpunkt immer nur in einer bestimmten Richtung erfolgt, also das Senden und das Empfangen zeitlich nacheinander durchgeführt wird.

## Patentansprüche

1. Elektrische Steckvorrichtung mit einer Steckdose (10), die einen an einem Halter (11) befestigten Sockel (12) mit Kontaktelementen (13) und Anschlußklemmen (14) für Netzleitungen (17) und eine dem Halter (11) vorgesetzte Abdeckung (16) aufweist, wobei in der Abdeckung (16) ein Fenster (22,22a) zum lichtmäßigen Ankoppeln eines steckerseitig vorgesehenen Lichtwellenleiters an die Steckdose (10) angeordnet ist,
**dadurch gekennzeichnet,**
daß in der Steckdose (10) mindestens ein lichtelektrischer Wandler (21,21a) angeordnet ist, an den der steckerseitig vorgesehene Lichtwellenleiter (23,23a) durch das Fenster (22,22a) hindurch optisch koppelbar ist und der elektrisch an einen elektronischen Busankoppler (BA) angeschlossen ist, welcher mit einer Busleitung (19) verbindbar ist.

2. Steckvorrichtung nach Anspruch 1, dadurch gekennzeichnet, daß der Busankoppler (BA) an dem Sockel (12) befestigt ist.

3. Steckvorrichtung nach Anspruch 1 oder 2, dadurch gekennzeichnet, daß die Lichtdurchlaßöffnung (46,50) zum oder vom Wandler (21,21a) etwa fluchtend mit einer Bodenwand (16b) der Abdeckung (16) angeordnet ist.

4. Steckvorrichtung nach Anspruch 2 oder 3, dadurch gekennzeichnet, daß der Busankoppler (BA) auf der der Abdeckung (16) abgewandten Seite des Sockels (12) angeordnet ist und durch den Sockel (12) hindurch Kanäle (20;20a) für optische oder elektrische Leitungen verlaufen.

5. Steckvorrichtung mit einer Steckdose (70), die einen an einer Tragplatte (71) befestigten Sockel (72) mit Kontaktelementen und Anschlußklemmen für Netzleitungen (17) aufweist,
**dadurch gekennzeichnet,**
daß in der Steckdose (70) mindestens ein lichtelektrischer Wandler (74,75) angeordnet ist, der durch ein Fenster (78,79) der Tragplatte (71) hindurch mit dem einen Ende eines steckerseitig vorgesehenen Lichtwellenleiters (88,89) optisch koppelbar ist, und der elektrisch an einen elektronischen Busankoppler (BA) angeschlossen ist, welcher mit einer Busleitung (19) verbindbar ist.

6. Steckvorrichtung nach Anspruch 5, dadurch gekennzeichnet, daß der Busankoppler (BA) an dem Sockel (12) befestigt ist.

7. Steckvorrichtung nach einem der Ansprüche 1-6, dadurch gekennzeichnet, daß der mindestens eine lichtelektrische Wandler (21,21a) in einer von dem Sockel (12) abstehenden Säule (38,39) angebracht und durch elektrische Leitungen (40,40a) mit dem Busankoppler (BA) verbunden ist.

8. Steckvorrichtung nach Anspruch 7, dadurch gekennzeichnet, daß der lichtelektrische Wandler im Innern der rohrförmigen Säule (38,39) angeordnet ist und die Leitungen (40,40a) durch die Säule (38,39) hindurch verlaufen.

9. Steckvorrichtung nach einem der Ansprüche 1-8, dadurch gekennzeichnet, daß durch den Sockel (12) mindestens ein Lichtleiter (58,59;62,63) verläuft, der optisch mit einem lichtelektrischen Wandler gekoppelt ist und mit einem Ende in dem Fenster (22) der Abdeckung (16) bzw. der Tragplatte angeordnet ist.

10. Steckvorrichtung nach Anspruch 9, dadurch gekennzeichnet, daß das andere Ende des Lichtleiters (62,63) mit einem Kleber (66) an dem lichtelektrischen Wandler fixiert ist.

11. Steckvorrichtung nach einem der Ansprüche 1-10, dadurch gekennzeichnet, daß eine Aufweitungsoptik (45) vorgesehen ist, die das von einem lichtsendenden Wandler (21) ausgesandte Licht verbreitert und parallel ausrichtet.

12. Steckvorrichtung nach einem der Ansprüche 1-11, dadurch gekennzeichnet, daß eine Fokussieroptik (49) vorgesehen ist, die parallel einfallendes Licht auf den Empfangsbereich eines lichtempfangenden Wandlers (21a) fokussiert.

13. Steckvorrichtung nach einem der Ansprüche 1-12, dadurch gekennzeichnet, daß eine Abbildungsoptik (55) vorgesehen ist, die das von einem lichtsendenden Wandler (21) ausgesandte Licht auf das Ende eines steckerseitigen Lichtwellenleiters (23) fokussiert.

14. Steckvorrichtung nach einem der Ansprüche 1-13, dadurch gekennzeichnet, daß eine Abbildungsoptik (56) vorgesehen ist, die das von einem steckerseitigen Lichtwellenleiter (23a) ausgesandte Licht auf die Lichtempfangsfläche eines lichtempfangenden Wandlers (21a) fokussiert.

15. Steckvorrichtung nach Anspruch 9 oder 10, dadurch gekennzeichnet, daß der Lichtleiter (58,59) mindestens eine angeformte Linse (60) aufweist.

16. Steckvorrichtung nach einem der Ansprüche 1-15, dadurch gekennzeichnet, daß der Busankoppler (BA) mit zwei lichtelektrischen Wandlern (21,21a) verbunden ist, von denen der eine als Lichtsender (S) und der andere als Lichtempfänger (E) ausgebildet ist.

17. Steckvorrichtung nach einem der Ansprüche 1-16, dadurch gekennzeichnet, daß an der Steckdose eine Unverwechselbarkeitseinrichtung (31) vorgesehen ist, die das Einstecken des Steckers (15) nur in einer einzigen Orientierung zuläßt.

18. Steckvorrichtung nach Anspruch 2 oder 6, dadurch gekennzeichnet, daß der Busankoppler (BA) in einem rückwärtigen Gehäuse (18) des Sockels (12) angeordnet ist, welches eine Anschlußvorrichtung (37) für die Busleitung (19) aufweist.

19. Steckvorrichtung nach Anspruch 2 oder 6, dadurch gekennzeichnet, daß der Busankoppler (BA) in einem seitlich vom Sockel abstehenden Gehäuse angeordnet ist, das dem Sockel einstückig angeformt ist.

20. Steckvorrichtung nach Anspruch 1 oder 5, dadurch gekennzeichnet, daß der Busankoppler (BA) separat von der Steckdose (10) anaeordnet ist.

21. Steckvorrichtung nach einem der Ansprüche 1 bis 20, dadurch gekennzeichnet, daß in der Steckdose (10) ein lichtelektrischer Wandler (106) vorgesehen ist, der mit zwei lichtelektrischen Wandlern (21,21a) kommuniziert und durch ein einziges Fenster (22) mit dem steckerseitigen Lichtwellenleiter koppelbar ist.

22. Steckvorrichtung nach Anspruch 21, dadurch gekennzeichnet, daß der Lichtleiter (106) Y-förmig ausgebildet ist.

23. Steckvorrichtung nach einem der Ansprüche 1 bis 22, dadurch gekennzeichnet, daß ein erster Lichtleiterabschnitt (104) an der Abdeckung (16) und ein damit kommunizierender zweiter Lichtleiterabschnitt (106) an dem Sockel (12) befestigt ist.

## Claims

1. An electrical plug device comprising a socket (10) having a base (12) fastened to a holder (11) and provided with contact elements (13) and terminal clamps (14) for mains lines (17) and having a cover (16) set in front of the holder (11), a window (22, 22a) being provided in the cover (16) for the optical coupling of an optical waveguide provided in the plug to the socket (10),
characterized in
that, in the socket (10), at least one photoelectric converter (21, 21a) is provided (10) with which the optical waveguide (23, 23a) provided in the plug may be coupled optically through the window (22, 22a) and which is electrically connected to an electronic bus coupler (BA) that may be connected to a bus line (19).

2. The plug device of claim 1, characterized in that the bus coupler (BA) is fastened to the base (12).

3. The plug device of claim 1 or 2, characterized in that the light transmission opening (46, 50) to or from the converter (21, 21a) is arranged almost in flush with a bottom wall (16b) of the cover (16).

4. The plug device of claim 2 or 3, characterized in that the bus coupler (BA) is arranged on the side of the base (12) facing away from the cover (16) and that passages (20;20a) for optic and electric lines extend through the base (12).

5. A plug device comprising a socket (70) having a base (72) fastened to a support plate (71) and provided with contact elements and terminal clamps for mains lines (17),
characterized in
that, in the socket (70), at least one photoelectric converter (74, 75) is provided with which one end of the optical waveguide (88, 89) provided in the plug may be coupled optically through a window (78, 79) of the support plate (71) and which is electrically connected to an electronic bus coupler (BA) that may be connected to a bus line (19).

6. The plug device of claim 5, characterized in that the bus coupler (BA) is fastened to the base (12).

7. The plug device of one of claims 1 - 6, characterized in that the at least one photoelectric converter (21, 21a) is provided in a post (38, 39) projecting from the base (12) and is coupled to the bus coupler (BA) through electric lines (40, 40a).

8. The plug device of claim 7, characterized in that the photoelectric converter is provided within the tubular post (38, 39) and the lines (40, 40a) extend through the post (38, 39).

9. The plug device of one of claims 1 - 8, characterized in that at least one light guide (58, 59; 62, 63) extends through the base (12) that is optically coupled to a photoelectric converter and has one end arranged in the window (22) of the cover (16) or the support plate.

10. The plug device of claim 9, characterized in that the other end of the light guide (62, 63) is fixed to the photoelectric converter by means of an adhesive (66).

11. The plug device of one of claims 1 - 10, characterized in that an expansion optic(45) is provided that expands the light emitted from the light emitting converter (21) and orientates it in parallel.

12. The plug device of one of claims 1 - 11, characterized in that a focussing optic (49) is provided that focusses parallel incident light onto the receiving surface of a light receiving converter (21a).

13. The plug device of one of claims 1 - 12, characterized in that an imaging optic (55) is provided that focusses the light emitted by a light emitting converter (21) onto the end of an optical waveguide (23) of the plug.

14. The plug device of one of claims 1 - 13, characterized in that an imaging optic (56) is provided that focusses the light emitted from an optical waveguide (23a) in the plug onto the light receiving surface of a light receiving converter (21a).

15. The plug device of claim 9 or 10, characterized in that the light guide (58, 59) has at least one lens (60) formed thereto.

16. The plug device of one of claims 1 - 15, characterized in that the bus coupler (BA) is connected to two photoelectric converters (21, 21a), one of which is designed as a light emitter (S) and the other as a light receiver (E).

17. The plug device of one of claims 1 - 16, characterized in that the socket is provided with a non-reversibility means (31) allowing the plug (15) to be plugged in in only one orientation.

18. The plug device of claim 2 or 6, characterized in that the bus coupler (BA) is arranged in a rear casing (18) of the base (12) which has a terminal means (37) for the bus line (19).

19. The plug device of claim 2 or 6, characterized in that the bus coupler (BA) is provided in a casing protruding laterally from the base and being formed integrally with the base.

20. The plug device of claim 1 or 5, characterized in that the bus coupler (BA) is provided separate from the socket (10).

21. The plug device of one of claims 1 to 20, characterized in that the socket (10) is provided with a photoelectric converter (106) that communicates with two photoelectric converters (21, 21a) and may be coupled to the optical waveguide in the plug through a single window (22).

22. The plug device of claim 21, characterized in that the light guide (106) is Y-shaped.

23. The plug device of one of claims 1 to 22, characterized in that a first light guide section (104) is fastened to the cover (16) and a second light guide section (106) communicating therewith is fastened to the base (12).

## Revendications

1. Système de connecteur électrique avec une prise de courant (10), comportant un socle (12) fixé sur un support (11), qui est muni d'éléments de contact (13) et de bornes de raccordement (14) destinés à des lignes du secteur (17), et un entourage (16) disposé devant le support (11), une fenêtre (22, 22a) étant prévue dans l'entourage (16) pour le couplage optique à la prise de courant (10) d'un guide d'ondes lumineuses prévu du côté du connecteur,
caractérisé en ce que
au moins un convertisseur photoélectrique (21, 21a) est disposé dans la prise de courant (10), avec lequel le guide d'ondes lumineuses (23, 23a) prévu du côté du connecteur peut être couplé optiquement à travers la fenêtre (22, 22a), et qui peut être raccordé électriquement à un coupleur de bus électronique (BA) pouvant être relié à une ligne bus (19).

2. Système de connecteur selon la revendication 1, caractérisé en ce que le coupleur de bus (BA) est fixé sur le socle (12).

3. Système de connecteur selon l'une des revendications 1 ou 2, caractérisé en ce que l'orifice (46, 50) de passage de la lumière vers le convertisseur (21, 21a) ou partant de ce dernier est disposé sensiblement dans l'alignement d'une paroi de fond (16b) de l'entourage (16).

4. Système de connecteur selon l'une des revendications 2 ou 3, caractérisé en ce que le coupleur de bus (BA) est disposé sur le socle (12) du côté opposé à l'entourage (16), et en ce que des canaux (20 ; 20a) destinés à des lignes optiques ou électriques passent à travers le socle (12).

5. Système de connecteur avec une prise de courant (70), comportant un socle (72) fixé sur une plaque de support (71), qui est muni d'éléments de contact et de bornes de raccordement destinés à des lignes du secteur (17),
caractérisé en ce que
au moins un convertisseur photoélectrique (74, 75) est disposé dans la prise de courant (70) qui, par l'intermédiaire d'une fenêtre (78, 79) de la plaque de support (71), peut être couplé optiquement avec l'une des extrémités d'un guide d'ondes lumineuses (88, 89) prévu du côté du connecteur, et qui est raccordé électriquement à un coupleur de bus électronique (BA) qui peut être relié à une ligne bus (19).

6. Système de connecteur selon la revendication 5, caractérisé en ce que le coupleur de bus (BA) est fixé sur le socle (12).

7. Système de connecteur selon l'une des revendications 1 à 6, caractérisé en ce que le (ou les) convertisseur(s) photoélectrique(s) (21, 21a) est (sont) disposé(s) dans une colonne (38, 39) dépassant du socle (12), et est (sont) relié(s) au coupleur de bus (BA) par des lignes électriques (40, 40a).

8. Système de connecteur selon la revendication 7, caractérisé en ce que le convertisseur photoélectrique est disposé à l'intérieur de la colonne tubulaire (38, 39), et en ce que les lignes (40, 40a) passent à travers la colonne (38, 39).

9. Système de connecteur selon l'une des revendications 1 à 8, caractérisé en ce qu'au moins un guide d'ondes lumineuses (58, 59 ; 62, 63) passe à travers le socle (12), lequel est couplé optiquement avec un convertisseur photoélectrique et disposé par l'une de ses extrémités dans la fenêtre (22) de l'entourage (16) ou de la plaque de support.

10. Système de connecteur selon la revendication 9, caractérisé en ce que l'autre extrémité du guide d'ondes lumineuses (62, 63) est fixée par une colle (66) sur le convertisseur photoélectrique.

11. Système de connecteur selon l'une des revendications 1 à 10, caractérisé en ce qu'il est prévu une optique d'élargissement (45), qui élargit la lumière émise par un convertisseur photoémetteur (21) et l'oriente parallèlement.

12. Système de connecteur selon l'une des revendications 1 à 11, caractérisé en ce qu'il est prévu une optique de focalisation (49), qui focalise de la lumière incidente parallèle sur la zone de réception d'un convertisseur photorécepteur (21a).

13. Système de connecteur selon l'une des revendications 1 à 12, caractérisé en ce qu'il est prévu une optique de reproduction (55), qui focalise la lumière émise par un convertisseur photoémetteur (21) sur l'extrémité d'un guide d'ondes lumineuses (23) situé du côté du connecteur.

14. Système de connecteur selon l'une des revendications 1 à 13, caractérisé en ce qu'il est prévu une optique de reproduction (56), qui focalise la lumière émise par un guide d'ondes lumineuses (23a) situé du côté du connecteur sur la surface photoréceptrice d'un convertisseur photorécepteur (21a).

15. Système de connecteur selon l'une des revendications 9 ou 10, caractérisé en ce qu'au moins une lentille (60) est présente sur le guide d'ondes lumineuses (58, 59).

16. Système de connecteur selon l'une des revendications 1 à 15, caractérisé en ce que le coupleur de bus (BA) est relié à deux convertisseurs photoélectriques (21, 21a), dont l'un est réalisé en tant que photoémetteur (S) et l'autre en tant que photorécepteur (E).

17. Système de connecteur selon l'une des revendications 1 à 16, caractérisé en ce qu'un dispositif détrompeur (31) est prévu sur la prise de courant, qui n'autorise l'enfichage du connecteur (15) que dans une seule orientation.

18. Système de connecteur selon l'une des revendications 2 ou 6, caractérisé en ce que le coupleur de bus (BA) est disposé dans un boîtier arrière (18) du socle (12), ledit boîtier comportant un dispositif de raccordement (37) pour la ligne bus (19).

19. Système de connecteur selon l'une des revendications 2 ou 6, caractérisé en ce que le coupleur de bus (BA) est disposé dans un boîtier dépassant latéralement du socle, qui est formé d'un seul tenant sur le socle.

20. Système de connecteur selon l'une des revendications 1 ou 5, caractérisé en ce que le coupleur de bus (BA) est disposé séparément de la prise de courant (10).

21. Système de connecteur selon l'une des revendications 1 à 20 , caractérisé en ce qu'un convertisseur photoélectrique (106) est prévu dans la prise de courant (10), convertisseur qui communique avec deux convertisseurs photoélectriques (21, 21a), et qui peut être couplé à travers une seule fenêtre (22) avec le guide d'ondes lumineuses situé du côté du connecteur.

22. Système de connecteur selon la revendication 21, caractérisé en ce que le guide d'ondes lumineuses (106) est réalisé en forme de Y.

23. Système de connecteur selon l'une des revendications 1 à 22, caractérisé en ce qu'un premier tronçon (104) de guide d'ondes lumineuses est fixé sur l'entourage (16), et en ce qu'un deuxième tronçon (106) de guide d'ondes lumineuses communiquant avec celui-ci est fixé sur le socle (12).
